Europäisches Patentamt

**European Patent Office**

Office européen des brevets

(19)

(11) Publication number : **0 011 830 B2**

(12) # NEW EUROPEAN PATENT SPECIFICATION

(45) Date of publication of the new patent specification : **29.04.92 Bulletin 92/18**

(21) Application number : **79104652.7**

(22) Date of filing : **22.11.79**

(51) Int. Cl.$^5$ : **C08L 23/08,** C08K 3/00, C08K 5/01, E04B 1/74, D06N 3/04, B60R 3/04

(54) **Highly filled thermoplastic compositions based on ethylene interpolymers and processing oils and their use as carpet backside coating.**

The file contains technical information submitted after the application was filed and not included in this specification

(30) Priority : **22.11.78 US 963111**
**27.06.79 US 52927**

(43) Date of publication of application :
**11.06.80 Bulletin 80/12**

(45) Publication of the grant of the patent :
**05.10.83 Bulletin 83/40**

(45) Mention of the opposition decision :
**29.04.92 Bulletin 92/18**

(84) Designated Contracting States :
**BE CH DE FR GB IT LU NL SE**

(56) References cited :
**EP-A- 0 004 142**
**DE-A- 1 940 838**

(56) References cited :
DE-A- 2 319 431
FR-A- 2 126 995
GB-A- 1 156 987
NL-A- 6 703 583
US-A- 3 010 899
US-A- 3 203 921
US-A- 3 911 185

(73) Proprietor : **E.I. DU PONT DE NEMOURS AND COMPANY**
**1007 Market Street**
**Wilmington Delaware 19898 (US)**

(72) Inventor : **Schumacher, Frederick George**
**15 Wellington Road, Welshire**
**Wilmington, Delaware (US)**
Inventor : **Yllo, Walter**
**383 Ives Avenue**
**Carneys Point, New Jersey (US)**

(74) Representative : **Abitz, Walter, Dr.-Ing. et al**
**Abitz, Morf, Gritschneder P.O. Box 86 01 09**
**W-8000 München 86 (DE)**

EP 0 011 830 B2

## Description

Background of the invention

Field of the invention

This invention relates to highly filled blends and more specifically, it relates to highly filled blends of ethylene interpolymers modified with naphthenic or aromatic oil.

Description of the prior art

The use of processing oils with natural rubber or synthetic rubber-like compounds containing sulfur, accelerators, carbon black and other additives customarily used in the rubber industry is well known. In some instances in order to obtain very high tensile strength values, fillers are omitted. On the other hand, it is known that styrene/butadiene rubber (SBR) compounds, such as are used to adhere jute secondary backings to carpets, can readily hold up to 80% by weight or more of calcium carbonate filler. Vulcanization or curing enhances blend strength.

For thermoplastic elastomeric uses it is desirable both to avoid curing and to employ fillers to reduce blend costs, as well as to increase blend density.

Binary blends of ethylene/vinyl acetate (EVA) copolymer with filler are known as articles of commerce. The practical limit for addition of a filler such as the more commonly employed medium density fillers, e.g. $CaCO_3$, bauxite, gypsum, etc., is about 60% by weight, even when using a relatively low melt index (higher molecular weight) resin, or softer, higher vinyl acetate grades. As filler levels rise, other properties suffer, such as melt index (as it drops, extruder pressures mount rapidly), softness (the "hand" becomes much stiffer), and elongation (which drops alarmingly). Ultimately, at about the 70% filler level, it is not possible to compound binary EVA/Whiting (naturally occurring ground limestone, $CaCO_3$, from Georgia Marble Company) blends as the mixture will no longer "flux" in a Banbury Mixer (the charge merely stirs-the resin will not "work" as the blades turn, no power rise ensues, the mixture on discharge is still discrete EVA pellets in a powdery Whiting mass). If one were to use a very dense filler, such as $BaSO_4$, approximately 10% by weight more filler can be added to binary EVA blends.

Industrial noise and its control are items of increasing concern to governmental, environmental, and industrial organizations. Governmental agencies are establishing noise limits to which workers may be exposed to protect their health.

From an aesthetic standpoint, noise also presents problems. Advertisements for "quiet riding" automobiles are ubiquitous. Manufacturers are attempting to make other vehicles quiet as well-including campers, trailers, buses, trucks, and off-road-use farm vehicles.

It has long been known that interposing mass between a sound source and the area to be kept quiet is an effective means for attaining sound deadening. A stone wall is extremely effective-but is not often practical. A sheet of lead is thin, flexible, often highly effective, but costly. The challenge, then, is to attain a dense, thin, flexible sheet which can be interposed between a source of noise and the area to be quietened.

Sheets of thermoplastics or of rubber-like materials have long been used as sound-deadening means. To make the sheets flexible, dense, strong, and inexpensive has posed a challenge to compounders for many years. For some uses, such as automobile carpet underlayment, the sound-deadening sheet must also be moldable.

Schwartz U.S. Patent 3,904,456 is related to a method for inhibiting transmission of airborne noise by interposing in the air space between the noise source and the location to be insulated a thin, dense normally self-supporting film or sheet composed essentially of from 10 to 40% by weight of ethylene/vinyl acetate copolymer having an average vinyl acetate content of from 10 to 42% by weight and a glass transition temperature of at least 30°C below the average ambient temperature in the air space, and from 60 to 90% by weight of inorganic filler materials, such as sulfates, carbonates, oxides, etc. of barium, calcium, cadmium, etc., effective to density greater than at least 2 grams per cubic centimeter.

EVA copolymers have been used industrially for nearly two decades, however, they are not known to be used in conjunction with processing oils as articles of commerce. This could well be an outgrowth of the way EVA commercialization has proceeded. That is, most EVA blends are based on EVA/paraffin wax technology, where paraffin wax weight is often up to ten times the weight the EVA present. Furthermore, despite the obvious savings inherent in using lower-cost, lower-quality waxes, such as scale wax or slack wax, all attempts to do this have failed. The reason was always the same the oil content of the wax migrated and destroyed the effectiveness of the coating or adhesive when the oil reached the bond or sheet surface. Thus, compounders "knew" that oil could not be used in EVA blends and technology developed along other lines.

Rundle U.S. Patent 3,497,375 discloses coating compositions for wooden concrete molds consisting of ethylene/vinyl acetate copolymer and paraffinic oil. There is no filler employed in the coating compositions of this patent.

Monaghan U.S. 3,379,193 discloses teeth covers made of ethylene/vinyl acetate copolymer in itself or in combination with mineral oil and, if desired, with fibers and coloring materials. The preferred formulation is disclosed to be 47% by weight of ethylene/vinyl acetate copolymer, 47% by weight of mineral oil, 5% by weight of nylon fibers, and 1% by weight of titanium dioxide.

German Patent Application No. 2,319,431 discloses sound deadening composites suitable for use in automobiles which consist of a highly filled polymer sheet (for example, 300-1200 or even up to 1500 parts of filler per 100 parts of polymer) which on its backside is provided with a filler material sheet, e.g., a polymer foam. Suitable polymers for use are disclosed to be terpolymers of ethylene, propylene and a non-conjugated diene (EPDM), polyvinyl chloride (PVC), mixed polymers of ethylene and vinyl acetate (EVA), styrene-butadiene mixed polymers (SBR) and mixtures of these materials with thermoplastic polymers, such as polystyrene and polyolefins.

Boyer U.S. 3,010,899 discloses blends of ethylene/vinyl acetate resin and mineral oil which are either rubbery or grease like depending upon the proportion of oil to resin and can be used as a substitute for crepe rubber or as a grease. It is further disclosed that fillers such as carbon black or finely divided clays can be added to the rubbery products to increase hardness and produce materials suitable as floor tile. As indicated for example in Claim 11, the filler, carbon black, is present in a minor amount while the oil-ethylene/vinyl acetate copolymer mixture is present in a "major amount". In Example 2 an oil+resin/carbon black ratio of 4 parts by weight to 1 part by weight is indicated.

Rosenfelder U.S. Patent 3,203,921 discloses the use of compositions consisting essentially of 73-88% by weight of a homo- or copolymer of ethylene (which can be ethylene/vinyl acetate or ethylene/ethyl acrylate copolymer), 2-7% by weight of an aliphatic paraffinic hydrocarbon mineral oil and 10-20% by weight of a mineral filler (for example, calcium carbonate, barium sulfate, etc.) for preparing blow-moulded objects such as dolls.

FR-A-2 126 995 discloses sound-deadening compositions of 10-40 parts by weight of an EVA polymer and 90-10 parts by weight of an inorganic filler. The compositions can, if required, contain up to 10% of a plasticizer. There is, however, no information about the nature of suitable plasticizers. The use of processing oil is not mentioned in the reference.

Summary of the invention

According to the present invention there is provided a thermoplastic composition obtainable by intensive mixing at a temperature of between 160 and 190°C of (a) at least 5% by weight of a copolymer of ethylene with at least one comonomer selected from the group consisting of vinyl esters of saturated carboxylic acids wherein the acid moiety has up to 4 carbon atoms, esters of unsaturated monocarboxylic acids of 3 to 5 carbon atoms, and diesters of unsaturated dicarboxylic acids of 3 to 5 carbon atoms, wherein the alcohol moiety has 1-8, carbon atoms, or mixtures of such copolymers, the ethylene content of said copolymer or the ethylene content of said mixture of copolymers being at least 60% by weight, the comonomer content of said copolymer being from an amount sufficient to provide the desired oil compatibility and blend elongation to 40% by weight, end the melt index of said copolymer being from 0.1 to 150, provided that when said copolymer of ethylene is an ethylene/vinyl ester copolymer said copolymer can contain up to 15% by weight of carbon monoxide or sulfur dioxide; (b) from 5 to 15% by weight of naphthenic or aromatic oil; and (c) from 50 to 90% by weight of filler.

Further according to the present invention, there is provided the above composition wherein the filler has sufficiently fine particle size to enable production of a smooth, continuously extruded sheet, strand, or tube, substantially free of melt fracture and such that when said strand is pelletized it yields pellets that are free flowing.

Further provided according to the present invention are the above compositions in the form of a sound deadening sheet.

Still further provided according to the present invention are carpets and especially automotive carpets having a backside coating consisting essentially of the above compositions.

Detailed description of the invention

It has been found that inclusion of a naphtenic or aromatic oil in highly loaded blends of ethylene/vinyl acetate an filler allows the preparation of considerably higher filler level containing blends than can be attained in corresponding binary blends of EVA-filler. Furthermore these component blends can be prepared employing

3

high oil content, even in the absence of rubbers, elastomers, carbon black, or other oil absorbing materials. If desired, EVA-based, non-bleeding blends containing very high filler levels can be prepared employing certain processing oils according to the present invention.

The ethylene copolymers suitable for the composition of the present invention are copolymers with at least one comonomer selected from the group consisting of vinyl esters of saturated carboxylic acids wherein the acid moiety has up to 4 carbon atoms, esters of unsaturated monocarboxylic acids of 3 to 5 carbon atoms, and di-esters unsaturated dicarboxylic acids of 3 to 5 carbon atoms wherein the alcohol moiety has 1 to 8 carbon atoms. Terpolymers of ethylene and the above comonomers are also suitable. In addition terpolymers of ethylene/vinyl acetate/carbon monoxide containing up to about 15 percent by weight of carbon monoxide or sulfur dioxide can also be employed.

The ethylene content of the copolymer is at least 60% by weight and the comonomer content is from an amount sufficient to provide the desired oil compatibility and blend elongation to 40% by weight. Generally from 60 to 95% by weight of ethylene and from 5 to 40% by weight of comonomer will be suitable. The preferred ethylene and comonomer level is from 65 to 85% and from 15 to 35% by weight, respectively. A mixture of two or more ethylene copolymers can be used in the blends of the present invention in place of a single copolymer as long as the average values for the comonomer content will be within the above-indicated range.

Employing a copolymer containing over 28% non-ethylenic comonomer (such as vinyl acetate) results in blends that are less stiff and have lower tensile strength, while their elongation is increased. The most preferred level is 18 to 28 weight percent. Below 18% vinyl acetate, the blends become much stiffer, lose elongation, and oil compatibility problems arise. Even blends made with nonbleeding oils become "oily" as polyethylene homopolymer is approached.

Melt index of the copolymer can range from 0.1 to 150, preferably from 0.1 to 50.

Physical properties, principally elongation, decline to lower levels when the ethylene copolymer melt index is above 30. Lower melt index ranges, 1 to 10, are most preferred to maintain strength.

At least 5% by weight of ethylene copolymer is employed in the composition of the present invention, preferably from 5 to 30% by weight, and most preferably from 10 to 25% by weight.

In accordance with the above, suitable ethylene copolymers are such as ethylene/vinyl acetate, ethylene/ethyl acrylate, ethylene/isobutyl acrylate, ethylene/methyl methacrylate, and ethylene/vinyl acetate/carbon monoxide. Particularly suitable copolymers are ethylene/vinyl acetate, and ethylene/ethyl acrylate copolymers.

The oil ingredient of the composition of the present invention is known as processing oil. Three types of processing oils are known-paraffinic, aromatic and naphthenic. None of these are pure, the grades identify the major oil type present.

Paraffinic oils tend to "bleed" from blends.

Therefore, naphthenic and aromatic oils are used in the compositions of the present invention.

Processing oils are also subdivided by viscosity range. "Thin" oils can be as low as 100-500 SUS (Saybolt Universal Seconds) at 38°C. "Heavy" oils can be as high as 6000 SUS at 38°C. Naphthenic and aromatic oils with viscosity of from 100 to 6000 SUS at 38°C are used.

The amount of oil present in the composition of the present invention is from 5 to 15% by weight, preferably from 5 to 12% by weight. Most preferably when using a filler of medium density, such as calcium carbonate, and when using a filler of higher density, such as barium sulfate, the amount of processing oil is from 5 to 10% by weight.

Processing oil in the amount of in excess of 10% will cause the melt index to rise rapidly and the blend to become much softer. At extremes, for example, at 70% filler, over 15% oil and less than 15% EVA, the oil content overwhelms the blend as the amount of EVA present is not adequate to provide "guts" for the blend.

Table I shows the effect of the type of oil selected upon an important property of the final blend; i.e., does oil exude from the blend or does it stay bound firmly within the compound? Table II shows how the oil exudation ratings were arrived at. Table III summarizes the composition, properties and origin of various processing oils. In the Table I comparison five aromatic oils were evaluated. All of them stayed firmly bound within the compound, even after two weeks of standing. Further, all six paraffinic oils tested showed a marked tendency to exude within a week under ambient conditions. The test specimens all shewed a tendency to exude, all within a week, and, in some cases, on standing overnight.

The naphthenic oils generally showed no tendency to exude-although in a few cases some exudation was noted. Properties of oils depend upon two factors-the process and conditions used during refining and the source of the crude oil used. As examples, "Tufflo" 2000 (P) and "Tufflo" 2000 (H) are rated by the manufacturer as closely equivalent products. Nevertheless, the (P=Philadelphia) version did not bleed, but blends based on the (H=Houston) product showed a slight tendency to exude oil. Thus, the purchaser of an oil must evaluate it with care-and must work closely with the refiner to ensure constancy of quality. This is particularly true because industrially obtained processing oils are not "pure" in that they nearly always contain more than one type of oil. For example, an "aromatic" oil contains predominantly aromatic ring structures but also usually contains substantial proportions of naphthenic rings. Similarly, some naphthenic oils contain paraffinic oils as well. Relative proportional shifts among tie oil types will, of course, change blend performance.

The comments above apply to smooth pressed sheets, made with a high surface sheen, as would be produced in industry by a conventional combination of an extruder plus a set of polished finishing rolls. The detection of exudation tendency or degree is much more difficult, if not impossible, to observe when sheets with rough surfaces are used.

TABLE I

Exudation rating as a function of type and source of oil

| Ingredients: | | |
|---|---|---|
| | EVA #3*/EVA #4* (50/50) | 16% by wt. |
| | Oil to be tested | 9% by wt. |
| | Filler—No. 9 Whiting* | 75% by wt. |

Storage condition:     Two weeks at 22°C, 50% R.H.

| Oil | | Exudation rating |
|---|---|---|
| Aromatic: | "Sundex" 790 & 8600T | None |
| | "Flexon" 340 & 391 | None |
| | "Tufflo" 491 | None |
| Naphthenic: | "Circosol" 450, 4240 & 5600 | None |
| | "Sunthane" 450 & 4240 | None |
| | "Flexon" 676; "Flexon" 766 | None; heavy, respectively |
| | "Tufflo" 500 and 2000 (P) | None |
| | "Tufflo" 2000 (H) and 6024 | Slight |
| | "Tufflo" 6204 | Heavy |
| Paraffinic: | "Sunpar" 150 & 2280 | Heavy |
| | "Flexon" 815 & 865 | Heavy |
| | "Tufflo" 60 & 80 | Heavy |

*defined in Table IV

TABLE II

Oil exudation rating for compositions

| Rating | Visual | Tactile | Absorption on paper |
|---|---|---|---|
| None | No visible change | Feels dry | No transfer to paper |
| Very slight | No visible change | Dry | Smallest perceptible oil traces on paper |
| Slight | No visible change | Borderline | Oil transfer to paper is easily noticed |
| Moderate | Surface gloss changes noted—may look "wet" | Slippery feel but no visible transfer to fingers | Paper beneath sample is definitely wet— under entire sample area |
| Heavy | Wet film readily noticed—oil droplets may be visible | Heavy film exists— which streaks when rubbed. Finger feels oily after test | Paper is thoroughly wetted. Oil wicks well beyond the area in contact with the test strip |

TABLE III
Classification and characteristics of processing oils

| Trade name | Type[1] | ASTM type | SP.GR | Viscosity SUS[2] | | Carbon atoms % | | | Mol. wt.[3] |
|---|---|---|---|---|---|---|---|---|---|
| | | | | 38°C | 99°C | $C_A$ | $C_N$ | $C_P$ | |
| "Circosol" 4240 | N | 103 | 0.95 | 2525 | 87 | 21 | 39 | 40 | 395 |
| "Circosol" 5600 | N | 103 | 0.95 | 5945 | 135 | 20 | 38 | 42 | 450 |
| "Circosol" 450 | N | 103 | 0.94 | 515 | 52 | 21 | 37 | 42 | 355 |
| "Sunpar" 150 | P | 104 B | 0.88 | 500 | 64 | 4 | 27 | 69 | 530 |
| "Sunpar" 2280 | P | 104 B | 0.89 | 2907 | 155 | 4 | 25 | 71 | 720 |
| "Sundex" 790 | A | 102 | 0.98 | 3500 | 85.7 | 37 | 28 | 35 | 375 |
| "Sundex" 8600T | A | 101 | 0.98 | — | 300 | 30 | 22 | 48 | — |
| "Sunthane" 450 | N | 103 | 0.93 | 502 | 52 | 15 | 43 | 42 | 355 |
| "Sunthane" 4240 | N | 103 | 0.88 | 2206 | 85 | 18 | 41 | 41 | 400 |
| "Flexon" 340 | A | 102 | 0.95 | 130 | 38.7 | 31 | 41 | 28 | |
| "Flexon" 766 | N | 104 A | 0.90 | 503 | 58.2 | 1 | 45 | 54 | |
| "Flexon" 865 | P | 104 B | 0.87 | 332 | 43—61 | 4 | 27 | 69 | |
| "Flexon" 815 | P | 104 B | 0.90 | 2650 | 155 | 2 | 32 | 66 | |
| "Flexon" 676 | N | 103 | 0.93 | 1200 | 72 | 15 | 40 | 45 | |
| "Flexon" 391 | A | 102 | 0.98 | 4010 | 92 | 28 | 43 | 29 | |
| "Tufflo" 60 | P | — | 0.88 | 600 | 68 | 4 | 26 | 70 | 550 |
| "Tufflo" 80 | P | | 0.90 | 2640 | 155 | 4 | 23 | 73 | 720 |
| "Tufflo" 500[4] | N | | 0.94 | 518 | 52 | 22 | 36 | 42 | 355 |
| "Tufflo" 2000[4] | N | | 0.95 | 2150 | 82 | 20 | 39 | 41 | 390 |
| "Tufflo" 491[5] | A | | 0.99 | 7060 | 128 | 40 | 20 | 40 | 425 |
| "Tufflo" 2000[5] | N | | 0.93 | 2110 | 97 | 12 | 38 | 50 | 460 |
| "Tufflo" 6024[5] | N | | 0.89 | 175 | 43 | 1 | 50 | 49 | 345 |
| "Tufflo" 6204 | N | | 0.91 | 1750 | 91 | 2 | 49 | 49 | |

[1]A=aromatic; N=naphthenic; P=paraffinic. As classified by supplier
[2]SUS=Saybolt Universal Seconds≅5×Viscosity in mP.a · s (centipoise (cp))
[3]as provided by supplier
[4]from Philadelphia
[5]from Houston
Source of Circosol, Sunpar, Sundex, Sunthane oils was Sun Oil.
Source of Flexon oils was Exxon.
Source of Tufflo oils was Arco.

The third essential ingredient of the composition of the present invention is the filler. The percentage of filler that can be included in the composition of the present invention on a weight basis is primarily a function of the density of the filler. Particle size of the filler has a minor effect. Fine particle size fillers generally have a tendency to result in higher blend viscosities and they are also more expensive. ≠9 Whiting which has been used extensively in the present compositions (about 95% through a 44 μm mesh aperture) represents a viable midpoint in coarseness, availability and cost. Most preferred fillers are calcium carbonate, and barium sulfate. The amount of filler present in the composition of the present invention is from 50 to 90% by weight, preferably from 60 to 85% by weight. Most preferably, when using a filler of medium density, such as calcium carbonate, the amount of filler is from 65 to 80% by weight, and when using a filler of higher density, such as barium sulfate, the amount of filler is from 70 to 85% by weight.

When the ethylene interpolymer employed in the composition of the present invention is an ethylene/vinyl ester copolymer, such as ethylene/vinyl acetate, and when the filler employed in combination therewith is clay, such as "Suprex" Clay, it is necessary to add oil to the blend in order to passivate the clay. Proper sequencing of the addition of the ingredients is necessary to attain success in the mixing operation. Sequence A below, during intensive mixing will be successful; while Sequence B may fail, if the EVA/clay mixture is heated before the clay is passivated because of the decomposition of the EVA copolymer caused by the clay. Decomposition is accompanied by liberation of anhydrous acetic acid, and discoloration of the blend.

Sequence A: "X"-Clay-"Y"-Oil-Mix-EVA-Mix.

Sequence B: "X"-Clay-EVA-Mix-Oil-"Y"-Mix.

In the above illustration, "X" and "Y" may be either nothing or other fillers, diluents or resins that do not influence the otherwise probable adverse reaction of the EVA with untreated clay. The above passivation of clay in order to enable use of substantial amounts of clay in ethylene/vinyl ester blends is the subject matter of simultaneously filed European patent application EP 79 104 651.9.

Polymers, both homo- and copolymers, other than the ones referred to above, can also be used to some extent in combination with the above specified polymers without significantly interfering with the advantages obtained by the present invention. Similarly other ingredients can also be added to the compositions of the present invention by a compounder in order to obtain some desired effect, such as reduction of cost, or enhancement of physical property. Accordingly, extender resins, waxes, foaming agents, antioxidants etc. that are widely used, particularly in hot melts, can be included in the compositions of the present invention.

A commercially sized batch-type Banbury or equivalent intensive mixer is entirely suitable for preparing the compositions of the present invention. A Farrel continuous mixer ("FCM") is also an excellent mixing device. In either instance, dry ingredients are charged in routine fashion. It is convenient in most cases to inject the oil component directly into the mixing chamber of either unit as per widely used practice with this type of equipment. A mix cycle of about 3 minutes is generally adequate for the Banbury mixer at an operating temperature usually between 165 and 190°C. The operating rate for the FCM unit generally will fall within ranges predicted by literature prepared by the Farrel Company, Ansonia, Connecticut. Again, temperatures between 165 and 190°C are effective. In both cases, a very low oil level, say about 2-3%, may require higher temperatures, while oil levels above about 7% may mix well at lower mixer temperatures. While not evaluated, it is expected that other devices for compounding of viscous mixes (MI of 0.1 to 20) should be entirely satisfactory-but in any case, prototype trials in advance are desirable.

Once blends are mixed, routine commercial practices may be used, such as underwater melt cutting plus drying or use of sheeting plus chopping methods, to produce a final pelletized product.

Primary use for the compositions of the present invention will probably be in the sheeting field, particularly for low cost, dense sound deadening structures. Outstanding characteristics such as improved "hand", "drape", reduced stiffness, and reduced thickness of the extruded sheeting result from the compositions of the present invention.

The blends of the present invention can readily be extruded onto a substrate, such as an automotive carpet, or can be extruded or calendered as unsupported film or sheet. Depending upon the equipment used, and the compounding techniques employed, it is possible to extrude wide ranges of film thickness, from below 0.51 mm to above 1.91 mm. While not demonstrated, a film thickness of even less than 0.25 mm and over 2.54 mm could probably be readily attained. This then provides industry with an opportunity to vary the amount of sound deadening to be attained by varying film thickness, density of blends, ratio of filler load to binder, and similar techniques well known in the art.

The sound-deadening sheet produced may be used in various ways:

When applied to automotive carpet, blends described are an effective and economic means to deaden sound, while also simultaneously serving as a moldable support for the carpet.

When used in sheet form, the blends can be installed in other areas of an automobile, truck, bus, etc., such as side panels, door panels, roofing areas, etc.

In sheet form, blends may be used as drapes or hangings to shield or to surround a noisy piece of factory equipment such as a loom, a forging press, etc.

In laminated sheet form, blends, faced with another material, might be used to achieve both a decorative and a functional use-such as dividing panels in an open-format office.

In the application of the compositions of the present invention in carpets, the initial "soft" carpet manufacturing stages-tufting of loops, cutting them to form a plush if desired, dyeing and drying, and then storing as unbacked "soft" roll goods until ready to apply a back-coating-are entirely similar to well-known methods as already described in patents, e.g.: Stahl, U.S.P. 3,645,948. The disclosure of this patent is hereby incorporated by reference.

In preparing automotive carpet backed with a sound-deadening sheet, several routes may be used. All are technically feasible. The most logical routes would be (1) and (2) below, although route (3) would also be practical and might be preferred by one who did not want to invest in extrusion equipment.

Route (1)-Prepare an automotive-type "soft" carpet by tufting, dyeing, and drying following known methods. Then, using standard extrusion coating technology, apply first a relatively fluid precoating material such as a high melt index EVA or polyethylene resin or hot melt blend in an amount sufficient to bind the individual bundles as disclosed e.g., in Example III, of the above Stahl patent, and Smedberg U.S.P. 3,684,600. Then to the still warm and still soft precoated carpet, apply the desired amount of sound-deadening hot melt blend by means of a second extruder. Standard nip roll and chill roll means are used to secure good adhesion of the main coat to the precoat and to the carpet. The thickness of the combined layers of hot melt will be selected so as to achieve the desired sound-deadening level, in addition to moldability, shape retention ability, fuzz and pill resistance, etc. as is required by the ultimate customer.

Route (2)-In place of two extruders, it is possible to use a latex precoat, followed by a drying oven, which then will ultimately be followed by an extruder to apply the sound-deadening coating. Alternatively, the precoating method taught by Smedberg, U.S.P. 3,684,600, may be employed. In either case, the extrusion step can be carried out on an in-line basis, or, alternately, the sound-deadening coating can be extruded onto the carpet in a future operation.

Route (3)-The carpet can be made and precoated as per Route (1) or Route (2) above, and then stored. Sound-deadening sheet can be made elsewhere by extrusion or a calendering process in a totally independent operation. Then, the sheet can be laminated to the carpet by preheating the to-be-mated faces of the carpet and the sound-deadening sheet by appropriate means (ovens, IR heat), and the final structure assembled. Assembly would take place through applying pressure to the mating faces, as for example, by a set of nip rolls. This technology is similar to that taught by Ballard U.S.P. 3,940,525.

Effectively, all of the routes described above would apply with equal force to the preparation of carpet for flooring uses. The final product obtained would be different from standard floor-type carpet in that it would not require a sheet of secondary jute or synthetic scrim, for reasons given above and covered in the Ballard patent. It would be different from automotive carpet primarily because of face-side styling differences.

Thus, the initial processing steps would be tufting, dyeing, drying, as described above-followed by precoating, as described above-followed by application of the heavy coat (sound deadening coat) as described in Routes (1)-(3) above.

Surprisingly, it has been discovered that when a superfine filler is used in compounding highly filled processing oil modified thermoplastic compositions, rather than the coarser-ground fillers generally employed for products of this type, the following benefits result:

1. Particles of the product are smoother following extrusion of strands and cutting into pellet form.

2. The bulk density is increased.

3. The smooth pellets hold very little water and thus are easily dried. Comparatively little energy input is needed to dry smooth pellets.

4. The pellets which have a smooth surface do not "bridge", and hence will flow much faster under equal handling stress than do pellets which have rough surfaces.

5. As a result of the above, manufacturing rates can be improved, energy input needed to dry off pellets is reduced, and need for added labor to unload rail cars is avoided or sharply lowered.

6. It is anticipated that extrusions in other than round strand form will also benefit substantially from a smooth sheet, free of melt fracture effects.

No. 9 Whiting which has been used extensively in sound deadening compositions (about 95% through a 44 $\mu$m mesh aperture, maximum particle size of at least about 95% by weight is about 44 $\mu$m and mean particle size by weight is about 20 $\mu$m) often represents a viable midpoint in coarseness, availability and cost. As mentioned above and shown below, it has been found that a surprising difference can be attained by use of filler particles which are much finer than those found in $\neq$9 Whiting. Specifically, when ultrafine (paint-use) powdered filler such as "Atomite" or "Microfill $\neq$2" is substituted for $\neq$9 Whiting, the final strand (rod) or sheet-form product, upon extrusion in conventional equipment, will be smooth. Where $\neq$9 Whiting is employed, melt fracture effects can be severe. By substituting "Atomite", "Microfill" $\neq$2, or an equivalently fine (paint type) filler for the coarser $\neq$9 Whiting (a caulk or putty grade, widely used also for plastics or elastomer extension), the final thermoplastic blend will exhibit little or no melt fracture, even though no other changes are made in composition or in extrusion conditions.

The particle size of the filler employed in the compositions of the present invention should be sufficiently fine to enable production of a smooth continuously extruded sheet, strand or tube, substantially free of melt fracture and such that when the strand is pelletized, it yields pellets that are free flowing (see U.S.P. 4,263,196, column 8, lines 67-68).

Generally, at least 95% by weight of the particles of the filler should have an equivalent spherical diameter smaller than 25 $\mu$m, and at least 50% by weight of the particles of the filler should have an equivalent spherical diameter smaller than 12 $\mu$m. Even better surface characteristics are obtained when the above 95% and 50% diameters are smaller than 12 and 6 $\mu$m, respectively. Most preferred surface characteristics are obtained when the above 95% and 50% diameters are smaller than 8 and 3 $\mu$m.

Table XIII shows detailed physical property data for many commonly used commercial fillers. The properties tabulated are based upon literature or communications from the manufacturers; but, as changes will occur due to variations in raw material sources, equipment condition, and market conditions, those who work in this field are cautioned to contact manufacturers to be certain the products of possible interest remain available and to obtain the most recently available data concerning them, or newer possibly preferable replacements.

TABLE XIII
Typical physical properties of fillers[1]

| Filler no. | Trade name & supplier[2] | Particle size information[3] | | |
|---|---|---|---|---|
| | | Average ($\mu$m) | Range ($\mu$m) | % on a 44 $\mu$m mesh aperture |
| 1 | "Atomite" (T-W) | 2.5 | 0.5 to 10 | practically 0 |
| 2 | "Gama-Sperse" 6532 (G.M.) | 3.4 | 99.5% <12 | 0.005% max. |
| 3 | "Snowflake" (T-W) | 5.0 | 1.0 to 20 | practically 0 |
| 4 | "Duramite" (T-W) | 14 | 2.5 to 25 | practically 0 |
| 5 | "Wingdale" (G.M.) | 8.4 | 99.5% <42 | 0.2% max. |
| 6 | "Microfill" #2 (CCC) | 6.0 | 98% <30 | 2.5% max. |
| 7 | "Drikalite" (T-W) | 5.5 | 1.0 to 44 | traces |
| 8 | #9 Whiting (G.M.) | ca. 20 | — | 9.0% max. |
| 9 | "LC" Filler (G.M.) | ca 25 to 26 | — | 15—20% typical |
| 10 | Calwhite (G.M.) | 5.4 | — | 0.008% max. |
| 11 | #22 Barytes (T.W.) | 12.0 | Up to 60 | 0.5% max. |

[1]Data are based on manufacturer's literature.

[2]All are ground limestone except for No. 11, which is barytes. Supplier code is:

CCC=Calcium Carbonate Company, Marble Falls, Texas.

GM=Georgia Marble Company, Atlanta, Georgia.

T-W=Thompson, Weinman & Company, Cartersville, Georgia.

[3]Relatively coarse fillers are generally specified by the mesh size of progressively finer screens. The finest screen size in general use is 44 $\mu$m; finer screens "blind" easily, are hard to clean without damage, and are little used. The relationship between screen size and particle size is given below.

| U.S. standard sieve no. | Particle diameter[a] in | |
|---|---|---|
| | $\mu$m | mm |
| 100 | 149 | 0.149 |
| 200 | 73.7 | 0.0737 |
| 270 | 53.3 | 0.0533 |
| 325 | 44.5 | 0.0455 |
| 400 | 38.1 | 0.0381 |

[a]Diameter means equivalent spherical diameter, i.e., the diameter of a sphere having the same volume as that of the particle. It is measured by standard means which are defined by the Pulverized Limestone Association.

In commerical practice, when ≠9 Whiting was used or instead a slightly coarser grade, "LC filler", was employed, we found the particles produced by a conventional melt cutter to be rough when making highly filled blends of the type described earlier. In turn, during commercial shipment, time, vibration, and pressure cause the pellets to compact and interlock, which requires added time and labor to transfer the product. Smoother pellets made from finer particle size filler do not bridge or interlock and thus are substantially free of unloading problems. A further benefit found when processing pellets of the present invention is the ease of drying the final product. Rough pellets from a melt cutting unit tend to hold substantial amount of free water in crevices. When smooth, dense pellets are produced, there is essentially no way that water can be entrained. Hence, smooth pellets can be dried rapidly with little energy input in comparison to that needed when drying rough, very wet pellets.

Similarly, when a sheeting die is used, the extrudate from blends high in filler often exhibit melt fracture. If severe enough, this can cause holes to form in the sheet. Use of ultrafine fillers combats melt fracture, thus providing greater manufacturing latitude when extruding sound-deadening or other types of sheeting.

The following examples are given for the purpose of illustrating the present invention. All parts and percentages are by weight unless otherwise specified.

Comparative Examples 1-9

These examples show the increasing difficulty encountered in making highly filled binary blends using EVA resins as the sole binder. All ingredients were premixed in a 3.8 l can by shaking manually for about 0.5 minutes.

The charge was then added to a Banbury-Type Laboratory-sized intensive highshear mixer. Mix conditions used were fluxing for 3 minutes, at a temperature of 160-190°C. Compositions and physical properties are summarized in Table XIII. When a high molecular-weight, 18% vinyl acetate (VA) containing resin was used, increasing the filler ($CaCO_3$) level to 65% from 55% reduced elongation tenfold. A further filler increase to 72.5% resulted in a mixture which no longer would flux in a Banbury mixer. The "product" emerged as unblended, dry ingredients. In similar fashion, use of a lower molecular-weight, 18% VA containing resin or of a softer and also lower molecular-weight EVA resin blend did not enable fluxing in a Banbury mixer at 72.5% filler loading. Addition of filler caused one other pronounced effect-the stiffness of the blend increased.

TABLE IV
Composition and physical properties of EVA —CaCO$_3$ blends

| Ingredients | Ex. C1 | Ex. C2 | Ex. C3 | Ex. C4 | Ex. C5 | Ex. C6 | Ex. C7 | Ex. C8 | Ex. C9 |
|---|---|---|---|---|---|---|---|---|---|
| EVA #1[1] | 45 | 35 | 27.5 | — | — | — | — | — | — |
| EVA #2[2] | — | — | — | 45 | 35 | 27.5 | — | — | — |
| EVA #3[3] | — | — | — | — | — | — | 22.5 | 17.5 | 13.75 |
| EVA #4[4] | — | — | — | — | — | — | 22.5 | 17.5 | 13.75 |
| #9 Whiting[5] | 55 | 65 | 72.5 | 55 | 65 | 72.5 | 55 | 65 | 72.5 |
| Physical properties | | | | | | | | | |
| SP. GR. of blend | 1.47 | 1.59 | | 1.39 | 1.55 | | 1.50 | 1.60 | |
| Tensile strength, k Pa | 7240 | 6230 | Will | 4560 | 4870 | Will | 4610 | 4320 | Will |
| Elongation, %[6] | 455 | 42 | not | 34 | 23 | not | 426 | 401 | not |
| Thickness of strip, MM | 1.88 | 1.78 | flux | 1.73 | 1.73 | flux | 1.73 | 1.73 | flux |
| Stiffness of strip, g[7] | 160 | 157 | | 99 | 121 | | 94 | 114 | |

Footnotes:

[1] 18% vinyl acetate, 82% ethylene copolymer; M.I.=2.5

[2] 18% vinyl acetate, 82% ethylene copolymer; M.I.=150

[3] 25% vinyl acetate, 75% ethylene copolymer; M.I.=2.0

[4] 25% vinyl acetate, 75% ethylene copolymer; M.I.=19.1

[5] Calcium carbonate, as commercial ground limestone; Georgia Marble Co.

[6] Tensile strength and elongation measurements made on Instron Tester using ASTM Method D1708 at crosshead speed of 5.1 cm/min. Samples are 2.23 cm×0.47 cm in size, at strip thickness shown in table.

[7] Stiffness of strip measured by placing a 2.54 cm×15.2 cm strip on a platform scale, and measuring the force required to make the ends of the test strip meet, at room temperature.

[8] Referred to water.

Examples 1-7 and Comparative Examples 10-13

The blends of these Examples were prepared and their physical properties were determined in the same manner as those of Comparative Examples 1-9. Compositions and physical properties are summarized in Table V. C-10 has a relatively low weight ratio-1.8-of filler to organic binder. When the ratio is raised to 2.6/1, as in C-11, the blend will not flux, as noted earlier. However, as shown in Example 1, at the identical filler loading, after having replaced part of the expensive resin with an inexpensive processing oil, a truly surprising result was obtained-the mixture fluxed well in the Banbury mixer. Even more surprisingly the blend of Example 2, which represents a further increase in filler/resin ratio, (4.1/1) not only fluxed well, but had properties of definite practical interest. For example, for comparison of properties of two sound-deadening sheets, it is important to compare them on an equal weight basis. That is, the two sheet density values, in $g/cm^2$ should be equal or as close as is reasonably possible. Thus, sheeting for Example 2 was deliberately made thinner than that for C-10, to attain equal sheet density

$$(1.78 \text{ mmx} \frac{1.59}{1.81} = 1.55 \text{ mm vs the experimentally-measured } 1.47 \text{ mm},$$

or within 0.076 mm of goal thickness).

Note that the stiffness of Example 2 sheeting is only about 1/3 of the stiffness of sheet from blend C-10, and still has tensile and elongation properties which remain in a commercially useable range.

A second comparison was made to learn whether this surprising finding was limited to high molecular-weight polymers such as that used in Examples 1 and 2. Examples 3 and 4, when compared to blends C-12 and C-13, show the same effects even though the EVA grades used are equivalent to a much softer copolymer (higher VA content) which also has a lower molecular weight.

Examples 5, 6, and 7 show blends with various combinations of filler, resin and oil and different ratios of filler to resin. The resulting property changes illustrate the lattitude available to the formulator in seeking a desired balance of properties.

TABLE V
Composition and physical properties of EVA —CaCO$_3$— processing oil blends

| Ingredients | Ex. C10 | Ex. C11 | Ex. 1 | Ex. 2 | Ex. C12 | Ex. C13 | Ex. 3 | Ex. 4 | Ex. 5 | Ex. 6 | Ex. 7 |
|---|---|---|---|---|---|---|---|---|---|---|---|
| EVA #1 | 35 | 27.5 | 20.5 | 17.5 | — | — | — | — | — | — | — |
| EVA #3 | — | — | — | — | 17.5 | 13.75 | 9.75 | 8.75 | 9.0 | 11.25 | 10.5 |
| EVA #4 | — | — | — | — | 17.5 | 13.75 | 9.75 | 8.75 | 9.0 | 11.25 | 10.5 |
| #9 Whiting | 65 | 72.5 | 72.5 | 72.5 | 65 | 72.5 | 72.5 | 72.5 | 75.0 | 70.0 | 70.0 |
| "Circosol" 4240[1] | — | — | 7 | 10 | — | — | 8 | 10 | 7.0 | 7.5 | 8.0 |
| Filler/organic ratio | 1.8/1 | 2.6/1 | 2.6/1 | 2.6/1 | 1.8/1 | 2.6/1 | 2.6/1 | 2.6/1 | 3/1 | 2.33/1 | 2.33/1 |
| Filler/resin ratio | 1.8/1 | 2.6/1 | 3.5/1 | 4.1/1 | 1.8/1 | 2.6/1 | 3.7/1 | 4.1/1 | 4.2/1 | 3.1/1 | 3.33/1 |
| Physical properties | | | | | | | | | | | |
| SP. GR. of blend | 1.59 | \| | 1.82 | 1.81 | 1.60 | \| | 1.81 | 1.82 | 1.87 | 1.76 | 1.76 |
| Tensile strength, k Pa | 6230 | Will | 4470 | 4390 | 4320 | Will | 3280 | 2830 | 4030 | 3840 | 3360 |
| Elongation, % | 42 | not | 21 | 23 | 401 | not | 27 | 33 | 19 | 37 | 38 |
| Thickness of strip, MM | 1.78 | flux | 1.50 | 1.47 | 1.72 | flux | 1.50 | 1.50 | 1.50 | 1.57 | 1.57 |
| Stiffness of strip, g | 157 | \| | 89 | 57 | 114 | \| | 53 | 45 | 73 | 65 | 62 |

[1]A naphthenic processing oil available from Sun Petroleum Products Company. The composition for the oil as given by the supplier is 39% naphthenic carbon, 40% paraffinic carbon, and 21% aromatic carbon. Viscosity at 38°C is 2525 SUS. Specific gravity is 0.9490.

Examples 8-11

Whiting ($CaCO_3$) is a very common and cheap filler with a density of about 2.7 $g/cm^3$. One might elect to employ a very dense, but more costly filler to achieve a special purpose. Table VI illustrates some ways the new technology can be employed with a dense filler. Blend preparation and determination of physical properties followed the procedure outlined in preceding examples. Example 8 shows a blend which contains 75% whiting by weight-or about 51 % by volume. Examples 9 and 10 show the results when barytes is used instead, on a simple substitution basis, by weight. Example 11 shows properties attainable, when barytes is substituted for whiting, by volume.

These changes are very significant in specialized uses, e.g., sound-deadening sheeting or backing. For example, the compounder has several choices:

(a) For maximum weight at equal coating thickness, Example 11 would clearly prove superior.

(b) For equal weight at minimum coating thickness, Example 11 would again prove superior.

(c) Conversely, where maximum coating thickness is desired, at a given weight per unit area, Example 8 would prove best.

The data summarized in Table VI were deliberately generated in a way to produce nearly equal weights per unit area. If instead the test plaques had been made at equal thickness, the values noted for relative stiffness would change markedly. This represents another option available to one skilled in the art to practice the present invention, whereby a radical shift in goal properties can be secured. In using the above data, it is important to realize that small shifts in thickness or in methods of sample preparation can cause variations in measured values without departure from the essence of the invention.

TABLE VI

Composition and physical properties of EVA—$CaCO_3$ or $BaSO_4$—oil blends

| Ingredients | Ex. 8 | Ex. 9 | Ex. 10 | Ex. 11 |
|---|---|---|---|---|
| EVA #3 | 10 | 10 | 8.75 | 6.1 |
| EVA #4 | 10 | 10 | 8.75 | 6.1 |
| #9 Whiting | 75 | — | — | — |
| Barytes[1] | — | 75 | 75 | 82.5 |
| "Circosol" 4240 | 5 | 5 | 7.5 | 5.3 |
| Filler, % by volume | 51.3 | 39.5 | 39.5 | 50.7 |
| Physical properties | | | | |
| SP. GR. of blend | 1.87 | 2.32 | 2.28 | 2.67 |
| Tensile strength, k Pa | 4720 | 3830 | 2380 | 1580 |
| Elongation, % | 18 | 700 | 561 | 68 |
| Thickness of strip, MM | 1.47 | 1.19 | 1.22 | 1.02 |
| Stiffness of strip, g | 84 | 34 | 25 | 24 |

[1] A heavy filler having a density, of about 4.4 $g/cm^3$ consisting primarily of $BaSO_4$, obtained from commercial sources. For example 9, #22 Barytes from Thompson, Weinman was used. For Examples 10 and 11, Dresser Industries #85 Barytes was used. For all practical purposes, the materials are considered to be interchangeable.

Examples 12-13 and Comparative Example 14

Following the procedure of preceding examples blends were made with E/EA copolymer in place of the EVA copolymer. The results obtained (Table VII) were similar to the ones obtained with EVA copolymer.

The addition of "Circosol" 4240 to a binary blend enables use of a much-increased filler loading, while maintaining a practical degree of tensile strength and elongation characteristics and while appreciably reducing the stiffness of the final compound.

14

TABLE VII
Composition and physical properties of E/EA —CaCO₃— oil blends

| Ingredients | Ex. C-14 | Ex. 12 | Ex. 13 |
|---|---|---|---|
| E/EA[1] | 45 | 20.2 | 17 |
| #9 Whiting | 55 | 72.5 | 75 |
| "Circosol" 4240 | — | 7.3 | 8 |
| Physical properties | | | |
| SP. GR. of blend | 1.46 | 1.76 | 1.83 |
| Tensile strength, k Pa | 4930 | 3820 | 3450 |
| Elongation, % | 73 | 15 | 15 |
| Thickness of strip, MM | 1.90 | 1.55 | 1.50 |
| Stiffness of strip, g | 181 | 94 | 95 |

[1]Ethylene/ethyl acrylate copolymer, grade DPDA 6182 NT, obtained from Union Carbide Corporation, contains about 16% ethyl acrylate, about 84% ethylene, and has a melt index of about 1.5.

Examples 14-19

These examples illustrate the use of different interpolymers in practicing the present invention. Preparation and evaluation of the blends followed the procedure of preceding examples.

Compositions and physical properties are summarized in Table VIII.

The blends of these examples are free of surface tack and exuded oil at ambient temperature. One skilled in the art can readily make a wide assortment of changes, such as:

(a) Using blends of interpolymers.

(b) Using alternate fillers.

(c) Using other oil ingredients, such as aromatic or paraffinic oils, in place of all or part of the naphthenic oil used in Table VIII examples. It is, of course, possible to use oils of higher or lower viscosity to secure special effects.

(d) Adding other ingredients, such as waxes, rubbers, elastomers, tackifiers, plasticizers, extenders, resins, etc. such as are widely used in compounding of hot melts and extrudable compositions.

TABLE VIII
Composition and physical properties of blends of ethylene-interpolymers, CaCO₃ and oil

| Ingredients | Ex. 14 | Ex. 15 | Ex. 16 | Ex. 17 | Ex. 18 | Ex. 19 |
|---|---|---|---|---|---|---|
| E/IBA #1[1] | 20.2 | — | — | — | — | — |
| E/IBA #2[2] | — | 20.2 | — | — | — | — |
| E/MMA #1[3] | — | — | 20.2 | — | — | — |
| E/MMA #2[4] | — | — | — | 20.2 | — | — |
| EVA # 3 | — | — | — | — | 10.1 | — |
| Terpolymer #1[5] | — | — | — | — | 10.1 | — |
| Terpolymer #2[6] | — | — | — | — | — | 21 |
| #9 Whiting | 72.5 | 72.5 | 72.5 | 72.5 | 72.5 | 70.0 |
| "Circosol" 4240 | 7.3 | 7.3 | 7.3 | 7.3 | 7.3 | 9.0 |
| SP. GR. of blend | 1.84 | 1.81 | 1.81 | 1.84 | 1.85 | 1.74 |
| Tensile strength, k Pa | 1570 | 3700 | 3990 | 2410 | 2630 | 3760 |
| Elongation, % | 50 | 23 | 22 | 46 | 34 | 63 |
| Thickness of strip, MM | 1.47 | 1.50 | 1.50 | 1.47 | 1.47 | 1.57 |
| Stiffness of strip, g | 24 | 73 | 71 | 37 | 52 | 56 |

[1]ethylene/isobutyl acrylate copolymer, 32% isobutyl acrylate, 68% ethylene, 1.7 MI.
[2]ethylene/isobutyl acrylate copolymer, 20% isobutyl acrylate, 80% ethylene, 2.5 MI.
[3]ethylene/methyl methacrylate copolymer, 18% methyl methacrylate, 82% ethylene, 2.2 MI.
[4]ethylene/methyl methacrylate copolymer, 31% methyl methacrylate, 69% ethylene, 7.2 MI.
[5]ethylene/carbon monoxide/vinyl acetate terpolymer 65.5% ethylene, 11% CO, 23.5% vinyl acetate, 35 MI.
[6]ethylene/vinyl acetate/methacrylic acid terpolymer, 74% ethylene, 25% vinyl acetate, 1% methacrylic acid, 6 MI.

Examples 20-23

These examples illustrate how the melt index of the blends of the present invention can be controlled over wide ranges by the amount of oil employed. Compositions and results are summarized in Table IX. Melt index is of substantial practical importance to those who extrude compounds into sheet form or mold it into appropriate shapes. By proper control of melt index, optimum extrudate properties can be secured, or properties can be matched to the capability of available equipment.

TABLE IX
Effect of increasing oil content of the melt index of the blend

| Ingredients | Ex. 20 | Ex. 21 | Ex. 22 | Ex. 23 |
|---|---|---|---|---|
| Base compound[1] | 100 | 98 | 96 | 94 |
| "Circosol" 4240 | — | 2 | 4 | 6 |
| Melt index of blend[2] | 1.79 | 3.39 | 4.90 | 9.65 |

[1]Consists of (a) 20% of EVA copolymer having 25% VA, 75% ethylene, & 2MI; (b) 4% of EVA copolymer having 7.5% VA, 92.5% ethylene, & 1.2MI; (c) 6% of "Circosol" 4240 and (d) 70% of #9 Whiting.
[2]Determined by ASTM Method D 1238, at 190°C.

Example 24 and Comparative Example C-15

The blends of this Example were compounded in a laboratory-scale Banbury mixer for convenience, as previously described, and were then processed into sheet form in a conventional two-roll mill. To make test plaques or sheets, the desired amount of blend would be weighed, placed in a laboratory-scale heated press, and pressed (between smooth release sheets of Teflon® fluorocarbon resin) in a die of appropriate thickness. For convenience, the present die had an opening of 15.25 cmx 15.25 cm was cut from sheet stock of 1.47 or 1.65 mm of thickness, depending on blend density, and was charged in most instances with 63 grams of resin blend. This corresponds to 2.7 kg/m² a commonly used sheet weight for automotive carpet use. A typical cycle was:

(1) Place a Teflon® sheet on lower press platen or on top of a smooth steel baseplate if the platen is not truly smooth.
(2) Place an 20.3 cmx25.4 cm die plate (15.25 cmx 15.25 cm opening) atop the Teflon® sheet.
(3) Put 63 g. of resin in the cavity. (1-2 grams surplus may be needed as some blend may ooze out during pressing).
(4) Place a Teflon® fluorocarbon sheet atop the resin. Add a smooth steel upper plate if the platen is not truly smooth.
(5) Heat the press to 175C°.
(6) When the press reaches 175°C., slowly pump the press closed to a total pressure of about 55,600 N (1035 kPa, approximately).
(7) After 2 minutes, raise the ram pressure to 222,400 N (4140 kPa, approximately), and hold the pressure and temperature constant for about 1 minute.
(8) Shut off heat and cool press to ambient temperature with ram in closed position.
(9) Release pressure, remove sample, and cut to appropriate shape for further testing.
(10) Age samples overnight at 50% RH and 22°C.

In evaluating highly filled blends, great care and good technique must be used in making all samples, as surface imperfections will cause wide variations in measurements of tensile strength and elongation.

The composition of this Example, is viewed as preferred and as a logical starting point for a compounder because it offers an excellent balance of properties (cf. Table X). For example, the tensile strength value at 3790 kPa is high enough for anticipated uses for filled thermoplastic blends. Further, the elongation noted, at 455%, is outstanding for a highly filled blend. Despite these excellent properties, the stiffness value for the compound is only 76 g. vs. the high 118 g. for the oil-free comparative blend, C-15. As this balance of properties indicates, the blend of Example 24 can be readily prepared from its ingredients and also can be readily extruded into sheet form. On the other hand, Blend C-15, compared to Blends C-12 and C-13 (Table V), has about reached the ultimate upper limit for filler load on an oil-free basis. The compound tensile strength has jumped sharply, and elongation has dropped sharply vs. Blend C-12. Physical property data for Blend C-15 were not easily determined, as it was very difficult to make good, reproducible test coupons using so high a filler loading without inclusion of oil.

The above preferred blend does have a drawback; it is possible to produce more highly filled compositions, with an equal or higher oil content, and thus save substantially in raw material costs at the expense of physical properties. For example, compare the physical properties of the blend of Example 24 with the properties of blends of Examples 3 through 7 in Table V. The latter blends, while still useful for many purposes, have about 1/3 less tensile strength and about 1/10 the elongation-surely a major reduction. However, because EVA copolymers cost over 50¢/pound vs. less than 10¢/pound for oil and about a penny per pound for filler, it is readily apparent that many users will want to pursue the highest possible filler level aggressively. This is particularly true for automotive and other sound-deadening sheet, which depends upon mass for its effectiveness and often does not require great blend strength. Thus, it is likely that many industrial users will take the above "preferred blend" and reduce its excellent technical properties to a lesser level which will still be technically adequate for their uses and will be much more attractive from a competitive economic viewpoint. A skilled compounder will realize the trade-offs and options open to him in reducing performance to reduce price and can vary substantially the blends provided in the illustrative examples without departing from the spirit of the invention. Compounders can also elect to vary blend properties by substituting other grades of EVA copolymer for all or part of the EVA ≠3 content. For example, use of an EVA copolymer having a lower VA content or a lower MI or both, as shown in the blends of Examples 20-23, (Table IX), will provide a stiffer blend with improved resistance to deformation at temperatures above ambient. Similar changes can of course be effected by adding small amounts of unrelated resins, rubbers, elastomers, extenders, etc. without departing from the spirit of the invention.

Examples 25-26 and Comparative Example 16

These examples show that even readily fluxable EVA/filler blends having a relatively low filler content can be usefully altered by addition of small amounts of a processing oil. Compositions and results are summarized in Table XI. Blend C-16, for example, is a very stiff compound with good elongation and with a high tensile strength. To make the blends of Example 25 and Example 26, the resin content was reduced by 5% and 10%, respectively, and replaced by processing oil. The elongation values and the density were virtually unchanged. However, the blend became surprisingly softer, yet retained a good tensile strength value. Thus, addition of oil to a filled EVA system conferred benefits.

TABLE XI
Composition and physical properties EVA —CaCO$_3$— oil blends at 55% filler load

| Ingredients | Ex. C-16 | Ex. 25 | Ex. 26 |
|---|---|---|---|
| EVA ≠1 | 45 | 40 | 35 |
| ≠9 Whiting | 55 | 55 | 55 |
| "Circosol" 4240 | — | 5 | 10 |
| Physical properties | | | |
| SP. GR. of blend | 1.46 | 1.48 | 1.47 |
| Tensile strength, kPa | 6450 | 4260 | 3380 |
| Elongation, % | 396 | 348 | 384 |
| Thickness of strip, mm | 1.88 | 1.88 | 1.88 |
| Stiffness of strip, g | 153 | 99 | 72 |

Examples 27-35

The composition and physical properties of the blends of these examples are summarized on Table XII. The blends were made with a fixed proportion of EVA resins plus fillers following the procedure of preceding examples. While the percentage of oil present has been held constant, the type and viscosities have been varied.

Of the 9 oils tested in this series the aromatic oils showed no tendency to exude, while the paraffinic oils exuded. Of the naphthenic blends, only the Example 28 sample showed an exudation tendency. This sample contained "Flexon" 766, which has 54% paraffinic content, 45% naphthenic, and 1% aromatic. By contrast, the other three naphthenic oils had a paraffinic oil content of 42% or less. Thus, the need to carefully examine the type of oil selected is evident to ensure attaining the desired surface characteristics (i.e., dry or oily) for the final product.

All of the blends had about the same specific gravity, and thus the same thickness strips were compared. Results show the highest stiffness resulted when the highest molecular-weight oil was used. Further, scouting tests (not tabulated) showed that the blends made with low molecular-weight (low viscosity) oils had better resistance to flexing at temperatures below zero degrees Fahrenheit (below -18 °C).

## TABLE XII
### Composition and physical properties of EVA—CaCO₃—oil blends containing different types of oil

Ingredients:

| | | |
|---|---|---|
| EVA #3 & #4 | =8% of each | |
| Oil | =9% | |
| Filler (CaCO₃) | =75% | |

| | Ex. 27 | Ex. 28 | Ex. 29 | Ex. 30 | Ex. 31 | Ex. 32 | Ex. 33 | Ex. 34 | Ex. 35 |
|---|---|---|---|---|---|---|---|---|---|
| Type of Oil[1] | C450(N) | F766(N) | C4240(N) | C5600(N) | F340(A) | 5790(A) | S8600T(A) | T60(P) | T80(P) |
| Physical properties | | | | | | | | | |
| SP.G.R. of blend | 1.87 | 1.86 | 1.88 | 1.87 | 1.87 | 1.88 | 1.88 | 1.87 | 1.85 |
| Tensile strength, kPa | 2972 | 2910 | 2737 | 3289 | 2654 | 3861 | 3482 | 3192 | 2765 |
| Elongation, % | 15 | 22 | 19 | 21 | 21 | 18 | 22 | 24 | 18 |
| Thickness of strip, mm | 1.47 | 1.50 | 1.50 | 1.47 | 1.47 | 1.47 | 1.47 | 1.47 | 1.47 |
| Stiffness of strip, g | 47 | 45 | 40 | 55 | 46 | 63 | 60 | 47 | 50 |
| Exudation rating | None | Heavy | None | None | None | None | None | Heavy | Heavy |

[1]Key is:
C="Circosol"
F="Flexon"
S="Sundex"
T="Tufflo"
(N)=Naphthenic
(A)=Aromatic
(P)=Paraffinic

EP 0 011 830 B2

Examples 36-44 and Comparative Examples 17-18

These examples are summarized in Table XIV Comparative Examples 17-18 show the characteristics of pellets obtained when highly filled blends are made using relatively coarse fillers.

Sample preparation:

All ingredients were premixed in a 3.8 l can by shaking manually for about 0.5 minute. The charge was then added to a Banbury-type laboratory-sized intensive high-shear mixer. Mix conditions used were fluxing for 3 minutes at a temperature of 160-190°C. Unless indicated specifically to the contrary, all blends made contained 72.5% of the filler to be evaluated, plus 20.2% of a blend of EVA resins and 7.3% of a process oil, as identified in Table XIV.

The hot, fully-fluxed blend from the Banbury mixer was then passed through a standard-type two-roll mill to form a thin sheet (thickness=about 2 to 3 mm). After cooling, the sheets in turn were reduced to small chips which could readily be fed to a conventional extruder. Our tests were made using a co-rotating twin-screw Werner-Pfleiderer extruder from which the product emerged as two about 4.5 mm diameter strands. These were water-cooled, and then chopped by means of a Cumberland Cutter into pellet form (right cylinders of about 3.2x3.2 mm). Before the pellets were chopped, the strands fed into the cutter were blown with a stream of low-pressure air to blow off as much water as possible. The product pellets were evaluated at once for relative degree of water content, prior to tray-drying the pellets under ambient conditions.

After drying of the pellets, their principal physical properties were evaluated:

Visual rating of extrudate (strand smoothness):

This was rated visually and by touch on uncut strands. A rating of 1 means the strands are smooth, round, and essentially free of surface flaws. The surface is so smooth that water droplets are readily removable by simple means such as an air stream. A rating of 5 indicates the strands are extremely rough, jagged, and cannot be dried by a simple, quick air-blowing step. The rating system used is described in detail in Table XV.

Pellet water level:

On emerging from the Cumberland Cutter, pellets cut from fine-filler-containing smooth strands are dry to the touch. By contrast when a coarse filler is used, the pellets carry much free water, which wets the hands, blotting paper, etc. (See also Table XIV, footnote 7.)

TABLE XIV

Effects of filler type on the properties of EVA-based blends[1] at 72.5% filler loading

| Ex. no. | Filler[2] no. | Average particle size[3] ($\mu$m) | Visual[4] extrudate rating | Pour rate[5] | | Bulk density[6] g/ml | Visual[7] water level |
|---|---|---|---|---|---|---|---|
| | | | | 20—23°C | 32—35°C | | |
| 36 | 1 | 2.5 | 1 | 120,000 | 60,000 | 1.02 | Dry |
| 37 | 2 | 3.4 | $1\frac{1}{2}$ | 120,000 | 13,300 | 0.98 | Dry |
| 38 | 3 | 5.0 | $1\frac{1}{4}$ | 80,000 | 1260 | 0.95 | —[9] |
| 39 | 4 | 14.0 | $3\frac{1}{2}$ | 1180 | 29 | 0.92 | Mod. Wet |
| 40 | 5 | 8.4 | 3 | 7060 | 32 | 0.94 | —[9] |
| 41 | 6 | 6.0 | 2 | 40,000 | 286 | 0.97 | Dry |
| 42 | 7 | 5.5 | $1\frac{1}{2}$ | 48,000 | 1560 | 0.97 | Damp |
| C-17 | 8 | ca. 20 | $3\frac{1}{2}$ | 122 | —[8] | 0.89 | Mod. Wet |
| C-18 | 9 | ca. 26 | 5 | 3 | —[8] | 0.82 | Wet |
| 43 | 10 | 5.4 | $1\frac{1}{2}$ | 4800 | 2400 | 0.93 | Damp-Dry |
| 44 | 11 | 12.0 | $1\frac{1}{2}$ | 120,000 | 10,000 | 1.22 | —[9] |

[1]All blends in this table contain:
  (a) EVA #1=16.2%; 25% VAc; 75% ethylene; 2 MI
  (b) EVA #2=4%; 7.5% VAc; 92.5% ethylene; 1.2 MI
  (c) "Circosol" 4240—7.3%. A naphthenic processing oil available from Sun Petroleum Products Company. The composition for the oil as given by the supplier is 39% naphthenic carbon, 40% paraffinic carbon, and 21% aromatic carbon. Viscosity at 38°C is 2525 SUS. Specific gravity is 0.9490.
  (d) Filler=72.5%
[2]Fillers are described in Table XIII.
[3]Typical values from suppliers' charts or graphs. These are not specifications and thus may vary moderately from values given.
[4]For details of rating system, see Table XV. Rating of 1 is very smooth and "best"; 5 is very rough and "worst".
[5]Pour Rate is given in grams per 10 min. High values are best. See "Description of Pour Rate Test" below.
[6]Bulk density was measured by filling a 500-ml graduated cylinder to the 500-ml mark. Filling was accomplished by slow, careful pouring of the pellets into the cylinder, without vibration or tamping. Weight of pellets was measured in grams. Data were calculated in grams/ml.
[7]Visual water level: As described in more detail under "Sample Preparation", cooled strands ex the water bath are blown with an air stream to remove water before the strands are chopped. The pellets from the Cumberland strand cutter are examined carefully for the presence of water. The ratings as used in Table XIV are:
  Dry: The pellets are dry to the touch and will not deposit water on a paper towel.
  Damp: Pellets are not quite dry to the touch and deposit only traces of water on a paper towel.
  Moderately Wet: Pellets feel wet and a few water droplets will transfer readily to the hands or to a paper towel.
  Wet: Pellets contain much free water, some of which can be seen with the naked eye. Water transfers in droplet form from a handful onto the hands or forms wet patches on a paper towel.
[8]Not tested; samples would surely block.
[9]No observations made.

TABLE XV

Rating of extrudate strand properties

| | |
|---|---|
| 1=Best | =No roughness discernible to naked eye or to the touch on close examination. |
| 2=Very Good | =Slight roughness discernible to naked eye on close examination. Strands feel smooth to touch—but not so smooth as for a #1 rating. |
| 3=Fair | =Casual visual examination from close distance shows slight pock holes or ridges on extruded strands. A casual observer would readily classify strands as being rough to the touch. |
| 4=Poor | =Strand roughness is readily apparent to all observers at arms' length. Strands are definitely rough to the touch. |
| 5=Very Rough | =Strand roughness is severe and is easily detectable at a distance of 1.5 to 3 m from the sample. From a close distance, the sample has sizable ridges and pock marks. The strand looks and feels much like a very coarse rat-tail file. |

Bulk density:

Rough strands cut into pellets obviously produce rough pellets which require substantial space in a container. Thus, the bulk density value for smooth pellets made from fine filler is substantially higher than that measured when the same procedure is used with rough pellets. For a valid comparison, it is essential that the pellets being compared have the same specific gravity. It is for this reason that most of our data are presented at a uniform 72.5% filler loading.

Pour rating:

When a bulk flow or pour rating test is conducted on pellets made containing fine particle size filler, the smooth pellets flow instantly from the test vessel. By contrast, as the pellet roughness is increased, the pour rate falls sharply, eventually reaching a "no-flow" condition for "Control" pellets made using the coarse-grade "LC" filler. For test details, see "Description of Pour Rate Test", given below.

Description of pour rate test:

A key property of substantial importance for a bulk-shipped pelletized product is the ability of the blend to be emptied quickly and completely from a rail car. During rail car shipment, a series of events occur-all of which magnify the tendency of the contents of the rail car to "bridge" (interlock) so that it may become difficult to unload quickly, without special labor-intensive procedures:-

Time alone favors tendency to "bridge"-particularly by deforming and interlacing of rough pellets.
Pressure enhances tendency to deform and interlock.
High loading temperatures will soften thermoplastic pellets, thus increasing the tendency of the lading to deform and to bridge.
Vibration during shipment will accelerate the tendency of the lading to compact, interlock, and "bridge".

As a full rail car is an impractical means to test the relative ease of handling, unloading, or storing of pellets which are subject to "bridging", a small-scale, quick test is required. A test which will do this has been devised. In brief, it consists of placing a known weight of pellets to be tested into a standardized container at a predetermined temperature, applying substantial pressure for a short time period, releasing the pressure, and determining the rate of discharge of the pellets when the can is inverted. Temperature of pellets can of course be adjusted to match precisely the conditions under which a rail car will be loaded. By applying very high pressure for a short time, the compacting tendency of a long, slow rail car shipment can be simulated.

The steps in carrying out the laboratory-scale block resistance test are:

1. Weigh 200±1 grams of pellets into a standard 1/2-pint paint can. (Inside diameter=7.1 cm; height=7.4 cm.) The pellet temperature should be regulated in advance to a desired value by means of storage for an adequate time period in a laboratory oven. One hour preheating on a tray should suffice.

2. Quickly place 2 kg standard-type laboratory weight (diameter=6.6 cm) atop the pellet charge. This acts as a pressure distributor and transmitter-any other similar incompressible object with a diameter slightly smaller than the paint can might be used instead.

3. Place the can and the pressure transmitting weight into a standard-type laboratory press.

4. Apply 17,800 N of force for 15 minutes. (This is approximately 4,480 kPa far higher than will be encountered under routine storage conditions.) As the blends are compressible, adjust the applied load to 27,580 kPa at 3-minute intervals.

5. Release the pressure; remove the can; remove the weight; and gently but rapidly invert the can onto a wide-mesh (1.3x1.3 cm or larger) screen.

6. Using a stopwatch, measure the time required to empty the container-or, alternately, for blends with a poor flow rate, measure the amount of pellets which fall from the container in exactly 10 minutes.

7. For quick and easy comparison purposes, calculate the flow rate in grams/40 cm$^2$/min.

8. If desired, them convert the flow rate to any desired system of units to simulate the exit opening from a commercial storage system.

In practice, it may be desirable depending upon the type, size, and nature of the pelletized compound, to use a higher or lower pressure, consistently, to attain comparative results. For example, where the pellets are soft and are severely distorted or compacted by use of a 17,800 N pressure loading, it may be desirable to sharply reduce the pressure applied. Similarly, differently sized containers may also be desirable where a closer-to-full-scale trial is of interest.

During our tests, the use of 17,800 N pressure proved a good compromise in that very smooth pellets would not block and would pour from the container in less than one second. (Here, for convenience, we used a value of one second for calculating purposes.) Very rough blends would not flow at all-or might discharge 5 to 20 grams at the start of the maximum 10-minute test period allowed, and then stop flowing.

Note that the pellets shown in Comparative Examples C-17 and C-18 of Table XIV are of relatively low quality by all of the ratings described above. Visually the strands were rated at 3.5 and 5, respectively-or poor to very rough on the scale shown in Table XV. The pour rate values are very low-and correspond on an industrial scale to samples which will barely flow from a rail car at ambient conditions and may not flow at all at temperatures of 35°C or over. The freshly cut, rough, undried pellets hold large amounts of water, which, under commercial conditions, will require large equipment and high energy input to attain significant tonnage output of a dry product. A wet product is highly undesirable because: (1) Wet pellets will freeze into a monolith during wintertime rail shipment. (2) Wet pellets are notorious causes of problems upon extrusion or injection molding, and can cause personal injury or equipment damage, plus a poor-quality product. Finally, because pellets are rough, they do not "pack" well-which will require a relatively large-volume shipping container to package a fixed weight of goods.

Examples 36, 37, 38, 41, 42, and 43 show the dramatic and unexpected improvements attainable when the relatively coarse fillers used in Table XIV Comparative Examples C-17 or C-18 are replaced with fine fillers. By reducing the average particle size from 20-26 μm to about 2-6 μm, the following properties improve:-

The extrudate roughness rating is in the range of 2 or better.

Freshly cut pellets are dry or nearly so.

Bulk density values have risen by a significant amount.

Most important, pour rates have risen to rates which are far higher than those seen for blends C-17 and C-18.

As might be expected, when filler particles of an intermediate size are selected, blend properties tend to be midrange; that is, between "best" and "poorest" values, for all properties. Behaviour of this type is shown by Examples 39 and 40.

Example 44, which was made using barytes as a filler in place of the ≠9 Whiting used in other examples, shows properties which are significantly better than those for Examples 39 and 40. This occurs because whiting has a specific gravity value of about 2.7, while barytes has a value of about 4.5. As a result, at a concentration of 72.5% of filler by weight, the volumetric filler level is far less for the barytes-containing blend:

Whiting Blend≅52% filler by volume.

Barytes Blend≅36% filler by volume.

Thus, possible adverse effects which coarser fillers will induce will be far lessened for barytes-filled blends because surface effects are related to volume percentage of the solids in the blend, rather than to a weight percentage.

Examples 4547 and Comparative Examples 19-21

The benefits described above which accrue when the type of filler is changed from a coarse type to a finer grade also occur with ethylene-based resins other than those which are modified with vinyl acetate as a comonomer. Table XVI shows the changes which occur when changing from coarse to fine fillers for blends which contain 72.5% of filler and 7.3% of a process oil, plus a copolymer other than an EVA copolymer. The ethylene/ethyl acrylate blends of Comparative Example 19 and Example 45 are identical in all respects, with the sole exception of the filler particle size employed. Also, the ethylene/isobutyl acrylate copolymer blends of Comparative Example 20 and Example 46 are identical in all respects, with the sole exception of the filler particle size. Finally, a third set of blends was also prepared. The ethylene/methyl methacrylate copolymer blends of Comparative Example 21 and Example 47 are alike in all respects, with the sole exception of the filler particle size. In all three of these comparative cases, based on non-EVA ethylene copolymers, the same effects are noted:-

Fine filler produces a smooth extrudate strand.

Fine filler produces pellets which pour freely even after standing under load.

The bulk density value is higher when a fine filler is used.

Smooth pellets made using a finely divided filler hold very little water.

TABLE XVI

Effects of filler particle size on properties of ethylene copolymer blends at 72.5% filler[1]

| Ex. no. | Copolymer[2] no. | Filler[3] type | Visual extrudate rating | Pour rate 32—35°C | Bulk density (g/ml) | Visual water level |
|---|---|---|---|---|---|---|
| C-19 | A | Coarse | $4\frac{1}{2}$ | 22(4) | 0.85 | Wet |
| 45 | A | Fine | $1\frac{1}{2}$ | 120,000 | 0.99 | Dry |
| C-20 | B | Coarse | 5 | 66 (4) | 0.83 | Wet |
| 46 | B | Fine | 2 | 120,000 | 0.99 | Dry |
| C-21 | C | Coarse | 4 | 15 (4) | 0.86 | Wet |
| 47 | C | Fine | $1\frac{1}{2}$ | 120,000 | 1.0 | Dry |

[1]All blends contain:
 Copolymer=20.2%
 "Circosol" 4240=7.3%
 Filler=72.5%

[2]Copolymer numbers are:
 (A) Ethylene/ethyl acrylate copolymer, grade DPDA 6182NT, obtained from Union Carbide Corporation, contains about 15% ethyl acrylate, about 85% ethylene, and has a melt index of about 1.5.
 (B) Ethylene/isobutyl acrylate copolymer, 20% isobutyl acrylate, 80% ethylene, 2.5 MI.
 (C) Ethylene/methyl methacrylate copolymer, 18% methyl methacrylate, 82% ethylene, 2.2 MI.

[3]Coarse filler is Filler #8, Table XIII.
 Fine filler is Filler #1, Table XIII.

[4]Coarse filler samples will not flow when pour tested at 32°C; hence, all test data for coarse filler only were developed at the much-more-favourable 20—23°C ambient condition.

Examples 48-49 and Comparative Example 22

The beneficial effects of using a finely divided filler are not limited to blends which contain 72.5% filler. Table XVII shows the results secured when blends broadly similar to those of Table XIV are compounded using only 65% filler. When properties of the blend made for Comparative Example C-22 are compared to those of Examples 48 and 49, it is evident that the degrees of improvement is strongly related to the particle size of the selected filler.

Examples 50-53 and Comparative Examples 23-24

The preceding data are for blends made with ethylene copolymers which contain substantial amounts of comonomer. When the comonomer content is in the 18-28% range, the copolymers tend to be soft, and flow readily. At ranges from 15% comonomer and below, the polymers tend to be far stiffer. To determine whether the benefits noted earlier which accrue from the use of fine fillers also apply for blends made with stiffer resins, additional blends were made and their characteristics determined as summarized in Tables XVIII and XIX.

All blends were compounded in a laboratory-scale Banbury Mixer for convenience, as previously described, and were then processed into sheet form in a conventional two-roll mill. To make test plaques or sheets, the desired amount of blend would be weighed, placed in a laboratory-scale heated press, and pressed (between smooth release sheets of Teflon®-fluorocarbon resin) in a die of appropriate thickness. For convenience the present die had an opening of 15.25x15.25 cm, was cut from sheet stock of 1.47 or 1.65 mm of thickness, depending on blend density, and was charged in most instances with 63 grams of resin blend. This corresponds to 2.7 kg/cm² a commonly used sheet weight for automotive carpet use. A typical cycle was:

24

TABLE XVII
Effects of filler particle size on properties of EVA-based blends[1] at 65% filler

| Ex. no. | Filler[2] no. | Filler[3] type | Visual extrudate rating | Pour rate 32—35°C | Bulk density g/ml | Visual water level |
|---|---|---|---|---|---|---|
| C-22 | 8 | Coarse | 4 | 1250 | 0.83 | Wet |
| 48 | 1 | Very fine | $1\frac{1}{4}$ | 120,000 | 0.91 | Dry |
| 49 | 6 | Fine | $2\frac{1}{4}$ | 40,000 | 0.89 | Dry |

[1]All blends contain:
    a) EVA #1=25.0%
    b) EVA #2=3.5%
    c) "Circosol" 4240=6.5%
    d) Filler=65.0%
[2][3]Details are given in Table XIII.

TABLE XVIII
Effects of fine filler on the properties of blends based on EVA having low vinyl acetate comonomer content

| Ex.[1] | Filler no. & type[2] | Visual extrudate rating | Pour rate 32—35°C | Bulk density g/ml | Visual water level |
|---|---|---|---|---|---|
| C-23 | 8-Coarse | 2—3 | 2200 | 0.70 | Wet |
| 50 | 1-Very fine | 1—2 | 105,000 | 0.70 | Damp |
| C-24 | 8-Coarse | 3 | 1720 | 0.74 | Wet |
| 51 | 1-Very fine | 2 | 120,000 | 0.80 | Damp |
| 52 | 1-Very fine | 2 | 54,800 | 0.81 | Dry |
| 53 | 1-Very fine | 2 | 610 | 0.78 | Dry |

[1]Compositions and Blend properties are given in Table XIX.
[2]Fillers are described in Table XIII.

TABLE XIX
Composition and physical properties of table XVIII blends and selected blends of Table XIV

| Ingredients[1] | Example | | | | | | | |
|---|---|---|---|---|---|---|---|---|
| | C-23 | 50 | C-24 | 51 | 52 | 53 | C-17 | 36 |
| EVA #5 | — | — | — | — | — | — | 16.2 | 16.2 |
| EVA #6 | 40 | 40 | — | — | 28.5 | — | 4.0 | 4.0 |
| EVA #7 | — | — | — | — | — | 28.5 | — | — |
| EVA #8 | — | — | 40 | 40 | — | — | — | — |
| "Circosol" 4240 | 5 | 5 | 5 | 5 | 6.5 | 6.5 | 7.3 | 7.3 |
| Filler | 55 | 55 | 55 | 55 | 65 | 65 | 72.5 | 72.5 |
| Filler No. | 8 | 1 | 8 | 1 | 1 | 1 | 8 | 1 |
| Filler type | Coarse | Very Fine | Coarse | Very Fine | Very Fine | Very Fine | Coarse | Very Fine |
| Physical properties | | | | | | | | |
| Melt index[2] | 1.23 | 1.06 | 2.31 | 2.08 | 1.11 | 0.73 | 3.09 | 1.64 |
| Sp Gr of blend | 1.46 | 1.47 | 1.47 | 1.46 | 1.66 | 1.65 | 1.83 | 1.83 |
| Tensile strength[3] kPa | 7030 | 7790 | 5240 | 5030 | 7790 | 7240 | 4760 | 6070 |
| Elongation, %[3] | 30 | 40 | 67 | 49 | 26 | 30 | 34 | 46 |
| Strip thickness, mm | 1.90 | 1.90 | 1.82 | 1.85 | 1.67 | 1.70 | 1.50 | 1.52 |
| Stiffness of strip,[4] g | 260 | 260 | 155 | 150 | 200 | 150 | 70 | 64 |
| Pour rate 32—35°C | 2200 | 105,000 | 1720 | 120,000 | 54,800 | 610 | 122[5] | 60,000 |

[1]EVA characteristics
  #5: 25% vinyl acetate, 75% ethylene, MI=2.0
  #6: 7.5% vinyl acetate, 92.5% ethylene, MI=1.2
  #7: 9.5% vinyl acetate, 90.5% ethylene, MI=0.8
  #8: 12% vinyl acetate, 88% ethylene, MI=2.5
  Fillers are described in Table XIII.
[2]Determined by ASTM Method D 1238 at 190°C.
[3]Tensile strength and elongation measurements made on Instron Tester using ASTM Method D 1708 at crosshead speed of 5.1 cm/min. Samples are 2.23 cm x 0.47 cm in size, at strip thickness shown in table.
[4]Stiffness of strip measured by placing a 2.54 cm x 15.2 cm strip on a platform scale and measuring the force required to make the ends of the test strip meet at room temperature.
[5]Determined at 20—23°C—not determined at 32—35°C, as blocking of the sample is predictable.

EP 0 011 830 B2

(1) Place a Teflon® sheet on lower press platen or on top of a smooth steel baseplate if the platen is not truly smooth.

(2) Place an 20.3 cmx25.4 cm die plate 15.25x15.25 cm opening) atop the Teflon® sheet.

(3) Put 63 g. of resin in the cavity (1-2 grams surplus may be needed as some blend may ooze out during pressing).

(4) Place a Teflon® fluorocarbon sheet atop the resin. Add a smooth steel upper plate if the platen is not truly smooth.

(5) Heat the press to 175°C.

(6) When the press reaches 175°C., slowly pump the press closed to a total pressure of about 55,600 N (1053 kPa, approximately).

(7) After 2 minutes, raise the ram pressure to 222,400 N (4140 kPa, approximately), and hold the pressure and temperature constant for about 1 minute.

(8) Shut off heat and cool press to ambient temperature with ram in closed position.

(9) Release pressure, remove sample, and cut to appropriate shape for further testing.

(10) Age samples overnight at 50% RH and 22°C.

In evaluating highly filled blends, great care and good technique must be used in making all samples, as surface imperfections will cause wide variations in measurements of tensile strength and elongation.

Blends of C-23 and Example 50 are identical with the exception of fineness of filler. Both are based on a copolymer which contains only 7.5% vinyl acetate comonomer, and thus are quite stiff and hard. By contrast, EVA ≠5 with 25% vinyl acetate content, used as the principal resin in the blends of Table XIV, is flexible and will produce flexible blends as seen in Table XX.

TABLE XX

| | Stiffness[1] | Hardness[2] |
|---|---|---|
| EVA ≠5 | 20.7 | 36 |
| EVA ≠6 | 96.5 | 44 |

[1]MPa, method of ASTM D 747
[2]Shore D hardness, ASTM D 1706.

Examination of Table XVIII shows once again that the use of a finely divided filler yields blends which will be smoother to the eye and to the touch and thus will tend to hold less water and to have a far superior flow rate as measured by the pour rate test.

Examples 52 and 53 illustrate blends at 65% filler loading, between the earlier shown 55% and 72.5% filler contents. Since a fine filler was used, once again the pellets attained were smooth and dry. The pour rating for Example 52 is excellent; that for Example 53 is marginal. It is believed that the differences are due to use of copolymers having different vinyl acetate contents. The differences might also indicate that the pour rate test, although a useful screening test, may not be so precise as might be desired. Repetitive tests are desirable in all cases to be certain that error is not introduced in the long chain:

weighing-premixing-Banbury blending-extrusion-chopping-and final testing of pellets.

Discussions to this point have stressed only the effects of fine filler on physical extrudate properties such as smoothness, tendency to hold water, relative pour rates, etc. Those who wish to secure these benefits must, of course, plan to investigate other, unrelated changes to the properties of blends which might be caused by changing the type of filler. As a guide to compounders, Table XIX shows for several pairs of blends from Tables XIV and XVIII the types of changes which may be expected in other properties of interest. Generally, these changes are relatively small and are beneficial.

(a) Melt Index-In all cases, use of a finer filler decreased the melt index of the blend. Thus, the use of finer filler increases blend viscosity. However, the changes which occur are relatively small and will probably be acceptable for most end users.

In the case of Examples 52 and 53, the melt index change noted reflects the lower melt index for EVA ≠7, vs. that for EVA ≠6.

(b) Blend Specific Gravity-This property is affected only by filler loading-not by the particle size of filler or change in type of EVA resin selected.

(c) Tensile Strength and Elongation-In most cases, use of a finer filler will enhance these properties by 10 to 20%, although this did not occur for Example 51 vs. C-24. This could reflect lack of sufficient mixing for sample Example 51, or could reflect an error during the tensile test procedure. In any event, the bulk of our experience indicates that it is desirable to use a fine filler where optimum tensile strength and elongation are needed. Conversely, such minor changes are probably not commercially important to most users.

(d) Stiffness and Strip Thickness-All test strips made were based on constant weight per unit area, rather than constant volume per unit area. Thus, all comparisons presented must be judged on a pair basis. When this is done, it is evident that change of filler particle size is far less important than is filler amount. Further, choice of resin is an important variable, as shown by comparison of Example 52 with Example 53-higher VAc level results in a less stiff blend, despite the use of a lower melt index copolymer.

(e) Pour Rate-The significant improvement produced by use of finer filler has been discussed in detail above. The comparisons given above provide strong reasons for a compounder to employ an ultrafine filler-but a change of this type is of necessity accompanied by adverse effects. The amount of energy input needed to make finer and finer filler grades is a significant cost item. In addition, grinding and classification equipment output falls as finer particle sizes are produced, and the ultimate customer must of course bear the investment burden required. Thus, for every product the compounder must balance the costs of a finer filler versus the benefits that will accrue. Therefore, the "best" choice of filler fineness must vary from user to user from application to application.

**Claims**

1. A thermoplastic composition obtainable by intensive mixing at a temperature of between 160 and 190°C of (a) at least 5% by weight of a copolymer of ethylene with at least one comonomer selected from the group consisting of vinyl esters of saturated carboxylic acids wherein the acid moiety has up to 4 carbon atoms, esters of unsaturated monocarboxylic acids of 3 to 5 carbon atoms, and diesters of unsaturated dicarboxylic acids of 3 to 5 carbon atoms wherein the alcohol moiety has 1 to 8 carbon atoms, or a mixture of such copolymers, the ethylene content of said copolymer or the average ethylene content of said mixture of copolymers being at least 60% by weight, the comonomer content of said copolymer being from an amount sufficient to provide the desired oil compatibility and blend elongation to 40% by weight, and the melt index of said copolymer being from 0.1 to 150, provided that when said copolymer of ethylene is an ethylene/vinyl ester copolymer said copolymer can contain up to 15% by weight of carbon monoxide or sulfur dioxide; (b) from 5 to 15% by weight of naphthenic or aromatic oil; and (c) from 50 to 90% by weight of filler.

2. The composition of Claim 1 wherein the comonomer content of said copolymer is from 5 to 40% by weight.

3. The composition of Claim 1 wherein the filler has sufficiently fine particle size to enable production of a smooth, continuously extruded sheet, strand, or tube, substantially free of melt fracture and such that when said strand is pelletized it yields pellets that are free flowing.

4. The composition of Claim 3 wherein at least 95% by weight of the particles of said filler have an equivalent spherical diameter smaller than 25 μm and at least 50% by weight of the particles of said filler have an equivalent spherical diameter smaller than 12 μm.

5. The composition of Claim 4 wherein the comonomer content of said copolymer is from 5 to 40% by weight.

6. The composition of Claims 1, 2, 3, 4 or 5 in the form of a sound-deadening sheet.

7. The use of the compositions of Claims 1, 2, 3, 4 or 5 as carpet backside coating.

8. The use of the compositions of Claims 1, 2, 3, 4 or 5 as automotive carpet backside coating.

**Revendications**

1. Une composition thermoplastique pouvant être obtenue par mélange intensif à une température comprise entre 160 et 190°de (a) au moins 5% en poids d'au moins un copolymère d'éthylène avec au moins un comonomère choisi parmi les esters vinyliques d'acides carboxyliques saturés dans lesquels la portion acide a jusqu'à 4 atomes de carbone, les esters acides monocarboxyliques insaturés de 3 à 5 atomes de carbone, et les diesters d'acides monocarboxyliques insaturés de 3 à 5 atomes de carbone dans lesquels la portion alcool a 1 à 8 atomes de carbone ou des mélanges de tels copolymères, la teneur en éthylène de ce copolymère ou la teneur en éthylène dudit mélange de copolymères étant d'au moins 60 % en poids, la teneur en comonomère de ce copolymère allant d'une quantité suffisante pour donner la compatibilité avec l'huile et l'allongement du mélange désirés et 40 % en poids, et l'indice de fluidité à l'état fondu du copolymère étant compris entre 0,1 et 150, avec la condition que, quand le copolymère d'éthylène est un copolymère éthylène/ester vinylique, ce copolymère peut contenir jusqu'à 15 % en poids d'oxyde de carbone ou d'anhydride sulfureux ; (b) de 5 à 15 % en poids d'huile naphténique ou aromatique : et (c) de 50 à 90 % en poids de charge.

2. Une composition selon la revendication 1, dans laquelle la teneur en comonomère du copolymère est comprise entre 5 et 40 % en poids.

3. Une composition selon la revendication 1, dans laquelle la charge est en particules suffisamment fines pour permettre la production d'une feuille, d'un jonc ou d'un tube extrudés de manière continue lisses, sensiblement exempts de défauts de fracturation, à l'état fondu, et telle que, quand le brin est pastillé, il donne des pastilles s'écoulant librement.

4. Une composition selon la revendication 3, dans laquelle au moins 95 % en poids des particules de la charge ont un diamètre sphérique équivalent plus petit que 25 µm et au moins 50 % en poids des particules de la charge ont un diamètre sphérique équivalent plus petit que 12 µm.

5. Une composition selon la revendication 4, dans laquelle la teneur en comonomère du copolymère est comprise entre 5 et 40 % en poids.

6. Une composition selon l'une des revendications 1, 2, 3, 4 ou 5 sous la forme d'une feuille insonorisante.

7. L'utilisation des compositions des revendications 1, 2, 3, 4 ou 5 comme couche d'enduction de la face envers de tapis.

8. L'utilisation des compositions des revendications 1, 2, 3, 4 ou 5 comme couche d'enduction de la face envers de tapis d'automobiles.


## Patentansprüche

1. Thermoplastische Zusammensetzung, erhältlich durch intensives Mischen bei einer Temperatur zwischen 160 und 190°C von (a) wenigstens 5 Gew.-% eines Copolymeren von Äthylen mit mindestens einem Comonomeren, ausgewählt aus der Gruppe von Vinylestern von gesättigten Carbonsäuren, worin der Säurerest bis zu 4 Kohlenstoffatome aufweist, Estern von ungesättigten Monocarbonsäuren mit 3 bis 5 Kohlenstoffatomen und Diestern von ungesättigten Dicarbonsäuren mit 3 bis 5 Kohlenstoffatomen, worin der Alkoholrest 1 bis 8 Kohlenstoffatome aufweist, oder einer Mischung von solchen Copolymeren, wobei der Äthylengehalt des Copolymeren oder der durchschnittliche Äthylengehalt der genannten Mischung von Copolymeren mindestens 60 Gew.-% beträgt, der Comonomergehalt des Copolymeren von einer Menge, die ausreicht, um die gewünschte Ölverträglichkeit und Gemischstreckung zu ergeben, bis 40 Gew.-%, beträgt und der Schmelzindex des Copolymeren 0,1 bis 150 beträgt, vorausgesetzt, daß, wenn das Copolymere von Äthylen ein Äthylen/Vinylester-Copolymeres ist, das Copolymere bis zu 15 Gew.-% Kohlenmonoxid oder Schwefeldioxid enthalten kann, (b) 5 bis 15 Gew.-% an naphthenischem oder aromatischem Öl, und (c) 50 bis 90 Gew.-% Füllstoff.

2. Zusammensetzung nach Anspruch 1, worin der Comonomergehalt des Copolymeren 5 bis 40 Gew.-% beträgt.

3. Zusammensetzung nach Anspruch 1, worin der Füllstoff eine ausreichend feine Teilchengrösse aufweist, um die Erzeugung von einer bzw. einem glatten kontinuierlich stranggepressten Folie, Strang oder Rohr zu ermöglichen, die im wesentlichen frei von Schmelzbrüchen sind und dass, wenn der Strang pelletisiert wird, er zu Pellets führt, die freifliessend sind.

4. Zusammensetzung nach Anspruch 3, in der mindestens 95 Gew.-% der Teilchen des Füllstoffs einen äquivalenten sphärischen Durchmesser von kleiner als 25 µm aufweisen und mindestens 50 Gew.-% der Teilchen des Füllstoffs einen äquivalenten sphärischen Durchmesser von kleiner als 12 µm aufweisen.

5. Zusammensetzung nach Anspruch 4, worin der Comonomergehalt des Copolymeren 5 bis 40 Gew.-% beträgt.

6. Zusammensetzung nach Anspruch 1, 2, 3, 4 oder 5 in der Form einer schalltötenden Folie.

7. Verwendung der Zusammensetzungen nach den Ansprüchen 1, 2, 3, 4 oder 5 als Überzug für Teppichrückseiten.

8. Verwendung der Zusammensetzungen der Ansprüche 1, 2, 3, 4 oder 5 als Überzüge für Teppichrückseiten von Fahrzeugen.